# EUROPEAN PATENT APPLICATION

(11) **EP 1 248 182 A1**
(43) Date of publication of application: **09.10.2002**
(21) Application number: 01830683.7
(22) Date of filing: 05.11.2001
(51) Int. Cl.: G06F 3/023

(54) **Computer keyboard with every single key endowed with a visualization device**

(30) Priority: 06.11.2000 IT RM000202 U
(71) Applicant: d'Errico, Pietro, 81031 Aversa (CE) (IT)
(72) Inventor: d'Errico, Pietro, 81031 Aversa (CE) (IT)

(57) **Abstract**

The present utility model is refered to the realization of a computer keyboard - and generally to the realization of every fit device to the data introduction and/or commands to electronic elaborators and\or by machinery endowed of control panel - that has a device of applied visualization to every key. The main characteristics of the utility model are:
- More flexibility in the different situations of use regarding to a keyboard without visualization devices, since this keyboard shows its present state of response on behalf of the processer or of the machine, pressing every single key.
- Component production utilization already present on the market, as liquid crystal displays or similar, now amply used and tested.

## Description

### STATE OF THE ART

In the fast evolution of the computer and of the peripherals connected to them as, for example printers and monitors, the keyboard is one of the components that remains substantially unchanged. At present the keyboard, seen as an general input device , is nearly totally one-way.
In fact through the keyboard it is possible to input alphabetical, numerical, alphanumeric characters and symbols and give commands to the processer ( computer), but the same processer doesn't interact with the input device in a visible way to the operator.

Therefore, at present state, the keyboard generally does not show the state of qualification and key function in relation to the state of present elaboration ( for example determinate from an application package ) of the computer or of the more general control device .

Exemplifying to the maximum the situation, it is possible to say that the keyboard is substantially " dumb ", and that is a certainly anomalous fact if compared to the evolution of the other devices that fit in the man - machine relation.

### DESCRIPTION

The present utility model is refered to the realization of a keyboard and generally to an any device provided of keys , which purpose is that of introducing commands and\or alphabetic, numerical, alphanumeric characters or symbols to a corrispondent device to arrange the elaboration of such dates and\or commands, of which keys are supplied with a display.

In its practical realization, such keyboard presents to the operator as a set of keys of which each one, in time to time, shows images or alphanumeric characters through the display of the same key.

This display can be run:
- in indipendent way from the inside circuit to the same keyboard;
- and\or from the devicer to which the keyboard is physically connected.

They should not expect particular binds to the shape or to the position of such displays, neither to the their nature and construction.

Therefore they could be positioned on the top part of the key ( the surface that generally is pressed for the operation of the same key) or next to each one of them .

### Example N° 1.

Consider a computer on which you have installed different programmes. Generally all of them have the input from the keyboard in different ways, giving to the same physical key a different function. On the other hand, in its standard form the keyboard does not show visible differences respect to different package applications.

In the case of the present utility model, the keyboard can show, through the display, two different visualizations joined to the same physical key: a letter of the alphabet when the application is a word processor, an icon when the application is a plan programme.

### Example N° 2.

In the case of the keyboard of which we are talking about, applied to an industrial machinery, it would show a continuative signal of the qualification and of the function of every single key, avoiding mistakes on behalf of inexperienced operators.

## Claims

1. Keyboards for "personal computers ", or rather computers thought and planed for not professional use.

2. Keyboards for " Workstation " and " Server ", or rather computers for a specifically use.

3. Keyboards relative to electronic games-video games or alike- that foresees the data input and\or of commands

4. Introduction keyboards and\or of command for industrial equipment ( PLC, process control or similar )

5. Keyboards for the control and for the relative data input to machinery for civil or industrial use.
